# EUROPEAN PATENT SPECIFICATION

(11) **EP 1 011 950 B1**
(45) Date of publication and mention of the grant of the patent: **23.01.2002**
(21) Application number: 98917922.1
(22) Date of filing: 20.04.1998
(51) Int. Cl.: B29C 45/16, B29C 45/17

(54) **DEVICE AT A TOOL FOR INJECTION MOULDING DETAILS COMPOSED OF SEVERAL MATERIALS**
GERÄT FÜR EIN WERKZEUG ZUM SPRITZGIESSEN VON TEILEN AUS VERSCHIEDENEM MATERIAL
DISPOSITIF DESTINE A UN OUTIL POUR LE MOULAGE PAR INJECTION DE PIECES CONSTITUEES DE PLUSIEURS MATERIAUX

(30) Priority: 21.04.1997 SE 9701485
(43) Date of publication of application: 28.06.2000
(73) Proprietor: PB Option AB, 614 32 Söderköping (SE)
(72) Inventor: TORGILSMAN, Bertil, S-614 22 Söderköping (SE)
(74) Representative: Willquist, Bo
(86) International application number: SE9800714
(87) International publication number: WO9847686

(56) References cited:
- DE-C- 3 645 163

## Description

The present invention relates to a device in an injection moulding tool for compound injection moulding, in order, as the tool opens, to impart a rotational movement to a turning plate, rotatably supported in the tool by means of a rotating shaft, amounting to a certain angle, so that a part injection moulded in a first mould chamber can thereby be transferred to a further chamber of at least two mould chambers in the tool that is designed for the application of further material, as specified in the pre-characterising clause of claim 1.

In known injection moulding tools for compound injection moulding the rotation is produced by such a turning plate, for example by providing the latter with a geared rotating shaft, to which a reciprocating rotational movement is imparted by means of a rack that can be acted upon by a hydraulic cylinder. From and engineering point of view, however, it is preferable for the rotational movements to occur continuously in the same direction.

Imparting such a rotational movement to the turning plate which occurs continuously in the same direction by means of a hydraulic motor is also known in the art. Such a solution, however, has insufficient angular accuracy, for which reason separate positioning systems are usually required in order to ensure that the rotational movement is limited to precisely the required angle.

According to one embodiment of the present invention, a device of the type referred to in the introductory part is produced, which is capable, as the tool opens, of imparting a rotational movement to a turning plate rotatably supported in the tool by means of rotating shaft, with great angular accuracy, as specified in claim 1.

According to a further embodiment of the present invention a device is produced in which the rotational movement is designed to occur continuously with the same direction of rotation, as specified by claim 2.

In yet another embodiment of the present invention a device is produced in which an existing drive in the injection moulding machine is used to produce the rotational movement, as specified by claim 3.

The invention will now be explained in more detail below with the aid of an example of an embodiment of the present invention and with reference to the drawings attached, in which
- Fig. 1: shows an injection moulding tool for compound injection moulding, which is provided with a preferred embodiment of a device according to the invention in order, as the tool opens, to impart a rotational movement to a turning plate
- Fig. 2: shows how the tool according to figure 1 has been opened, other parts of the tool having been moved away from a fixed mould half.
- Fig 3: shows how a rotational movement can be imparted to the turning plate so that a semi-finished product of a first plastic material produced in a first mould chamber is transferred towards a second mould chamber.
- Fig. 4: shows how a further layer of a second plastic material is applied to the semi-finished product of a first plastic material in the second mould chamber
- Fig. 5: shows how the device is prepared to impart a rotational movement to the turning plate as the tool opens again
- Fig. 6: shows how a finished part composed of two plastic materials is released from the tool.

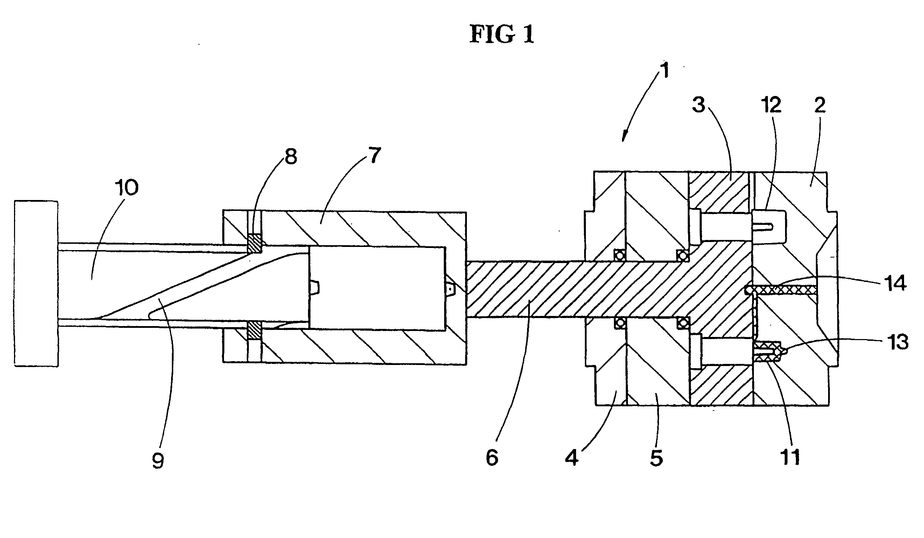

Figure 1 shows an injection moulding tool 1 for compound injection moulding comprising a fixed mould half 2, a rotatable mould plate, hereafter called a turning plate 3 that carries a mould part provided with a core and behind that two support plates 4, 5. The support plates 4, 5 each have a central through-aperture, through which a rotating shaft 6 is arranged. The rotating shaft 6, at a first end, is operatively connected to the turning plate 3, which is rotatably supported in the tool 1 by means of the rotating shaft 6. At a second distant end the rotating axis 6 has a casing 7, which carries two radially aligned and spring-loaded slides 8. These are designed to run in two opposing helical grooves 9, each of which is formed 180° around a circular shaft 10.

The moulding tool has two mould chambers 11, 12. When the tool 1 is in the position shown in figure 1, a semi-finished product 13 can be produced in the first chamber I I by an initial injection of a first plastic material, the semi-finished product 13 being designed for the application of a further plastic layer.

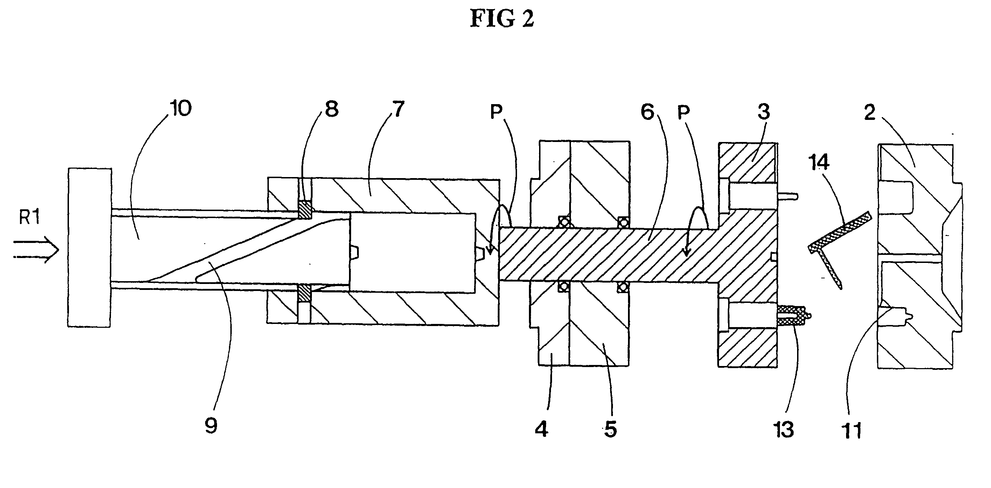

Figure 2 shows how the tool 1, after the first plastic material in the first mould chamber 11 has been allowed to set sufficiently, has been opened by moving other parts of the tool away from the first mould half 2. The ejection of an infusion 14 from the initial injection of the first plastic material also occurs in this position. A progressive, linear, axial movement in a first direction coinciding with the longitudinal direction of the rotating shaft 6, R1 in figure 2, relative to the slides 8, is initiated in the circular shaft 10 as the tool opens, for example in combined action with the progressive part of the ejection movement, the said movement resulting in the initiation of a rotational movement of the rotating shaft 6 and hence of the turning plate 3 in the direction indicated by the arrows P in figure 2.

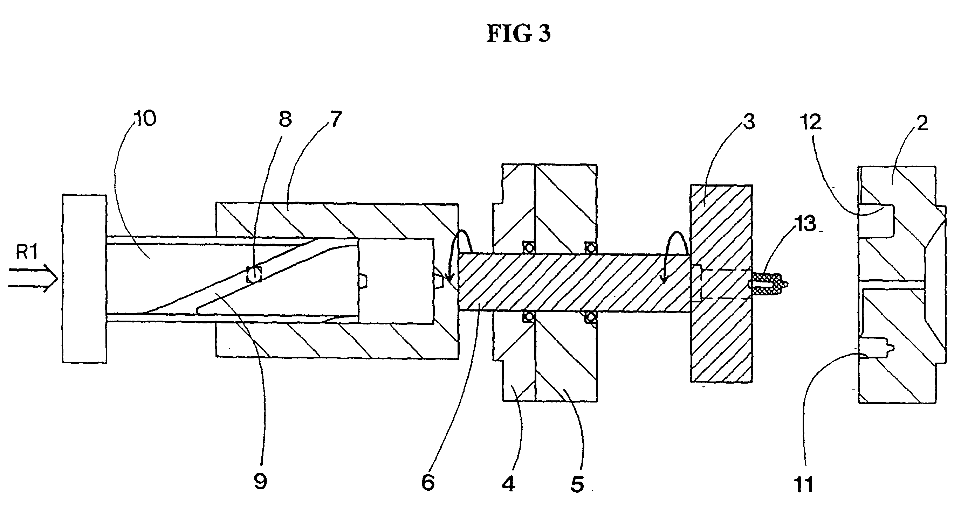

Figure 3 shows the tool 1 when half the rotational movement has been performed. This shows how the slides 8 follow the helical grooves 9, thereby imparting a rotational movement to the turning plate 3 so that the semi-finished product 13 of a first plastic material, produced in the first mould chamber 11, is transferred towards the second mould chamber 12. The helical grooves 9 are preferably made so that the rotational movement of the turning plate 3 occurs with constant acceleration during the first half of the rotational movement and with constant retardation during the concluding half of the rotational movement.

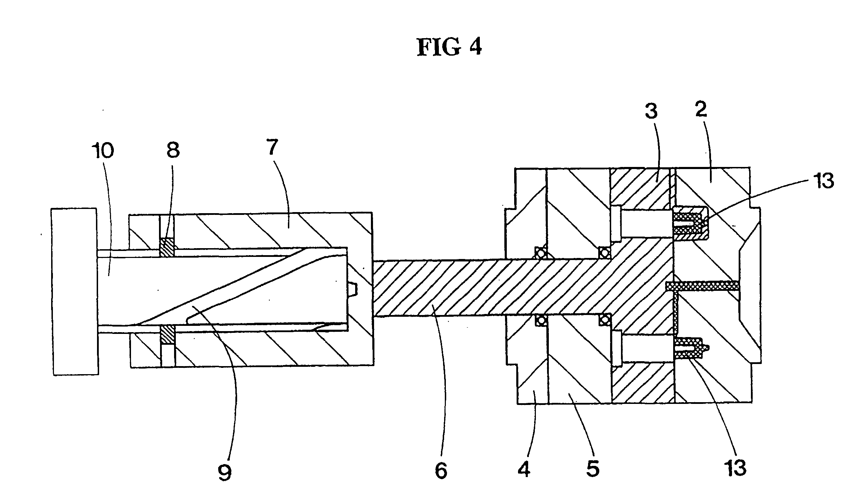

As shown in figure 4, the required 180° rotational movement has been imparted to the freely rotatable turning plate 3 in that the slides 8 have run through the helical grooves 9 from a first end to a second end of the circular shaft 10. The tool 1 has then been closed. The second mould chamber 12 now contains a semi-finished product 13 of a first plastic material such as was produced by injection of the first plastic material, to which product the further plastic layer is applied by the injection of a second plastic material, thereby resulting in a finished part 15. At the same time a further semi-finished product 13 is produced in the first mould chamber 11 through a further injection of a first plastic material.

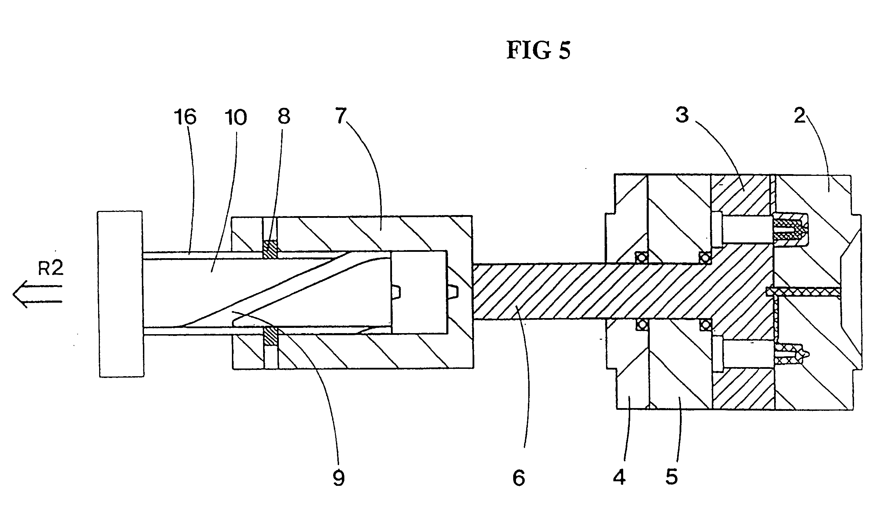

In order that the rotational movement will continue to occur in the same direction, the circular shaft 10 is provided with two axial depth rising grooves 16. On completion of the rotational movement of the turning plate 3 a linear axial movement is imparted to the circular shaft 10 in a second direction opposed to the first direction as indicated by the arrow R2 in figure 5, whereupon the slides 8 will run through the depth rising grooves 16 from a second to a first end of the circular shaft 10 and the turning plate 3 will thereby maintain the same angular position.

At a first end of the circular shaft 10, each depth rising groove 16 connects to a respective helical groove 9 on the outer surface of the circular shaft 10 and is furthermore made with a depth increasing towards the second end of the circular shaft 10, where it connects to the bottoms of each opposing helical groove 9.

During the linear axial movement in the second direction R2, the slides 8 will follow the axial depth rising grooves 16. Because the slides 8, under the spring loading, can move in a radial direction, they will run through each depth rising groove 16 respectively from the bottom of one helical groove 9 at the second end of the circular shaft 10, to then move against the action of the spring further and further out towards the outer surface of the circular shaft 10 until the depth rising groove 16 connects with the second opposing helical groove 9 at the first end of the circular shaft 10, in which helical groove 9 the slide 8 will now be pressed down by the spring, since this helical groove 9 is deeper than the depth rising groove 16 at the first end of the circular shaft 10.

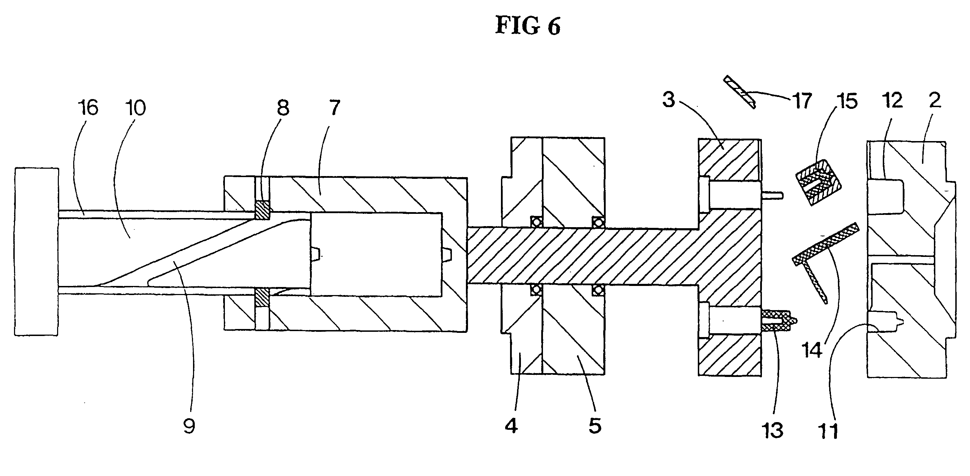

Figure 6 shows how the finished part 15 in the second mould chamber 12 is released from the tool 1 when the turning plate 3, which also carries the semi-finished product 13 from the first injection, is moved out of contact with the fixed mould half. Ejection of the infusion 14, 17 from the first and the second injection of plastic material also occurs in this position. After ejection, the tool 1 is again in the same position as in figure 2, following which the sequence according to figures 3, 4, 5 and 6 can be performed again in the order stated.

For each reciprocating linear axial movement, that is movement in the first direction R1, followed by the second direction R2, the turning plate 3 is progressed by 180°, which continues to occur in the same direction of rotation P, the control achieved by the helical grooves 9 resulting in good angular accuracy, which can also be further improved by means of a separate control, which is activated as the tool closes.

It will be obvious to a person skilled in the art that the invention is not confined to the embodiments described above, but rather can lend itself to modifications within the scope of the idea of the invention defined in the claims below. The casing 7, for example, may be made as a fork, in which the circular shaft 10 can be moved axially and which carries the radially aligned and spring-loaded slides 8, so that these can run through the helical grooves 9 as previously indicated. Alternatively, the rotating shaft 6 may be of hollow construction, thereby integrally forming the casing 7. The linear axial movement may, for example, be imparted to the circular shaft 10 by means of a hydraulic or pneumatic cylinder or in some other manner independent of the ejection movement. The tool 1 may be provided with any number of mould chambers and a helical groove 9 may be made around the circular shaft 10 for each mould chamber and these helical grooves 9 arranged in such a way that the rotational movement will amount to the angle 360°/the number of helical grooves. The circular shaft 10 may thereby also be provided with the same number of axial depth rising grooves 16 as helical grooves 9.

## Claims

1. Device in an injection moulding tool (1) for compound injection moulding, in order, as the tool opens, to impart a rotational movement to a turning plate (3), rotatably supported in the tool (1) by means of a rotating shaft (6), amounting to a certain angle, so that a part (13) injection moulded in a first mould chamber (11) can thereby be transferred to a further chamber of at least two mould chambers in the tool which is designed for the application of further material, **characterised in that** the rotating shaft (6) at a distant end carries at least one radially spring-loaded slide (8), which is designed to run in at least one helical groove (9), which is made around a circular shaft (10) to which, as the tool opens, a linear axial movement can be imparted in a first direction (R1) relative to the slide, so that that a rotational movement is imparted to the turning plate (3), by the slide (8) running through the helical groove (9) from a first to a second end of the circular shaft (10), and that the helical groove (9) is made so that that the rotational movement of the turning plate will occur with constant acceleration during the first half of the rotational movement and with constant retardation during the concluding half of the rotational movement.

2. Device according to claim 1, **characterised in that** one helical groove (9) is made around the circular shaft (10) for each mould chamber and that the helical grooves (9) are arranged so that the rotational movement is designed to amount to 360°/the number of helical grooves (9) and that the circular shaft (10) is provided with the same number of axial depth rising grooves (16) as helical grooves (9), the said depth rising grooves (16) at a first end of the circular shaft (10) each connecting with a helical groove (9) on the outer surface of the circular shaft and furthermore being made with a depth increasing towards the second end of the circular shaft where they connect to the bottom of each adjoining helical groove in the direction of rotation, and that, after the turning plate (3) has completed a rotational movement, a linear axial movement can be imparted to the circular shaft (10) in a second direction (R2) opposed to the first direction (R1), the slide (8) running through a depth rising groove (16) from a second to a first end of the circular shaft (10) and the turning plate (3) maintaining the same angular position.

3. Device according to either of the preceding claims, **characterised in that**, through an operative connection, the linear axial movement relative to the slide (8) can be imparted to the circular shaft (10) in combined action with a reciprocating ejection movement.

## Patentansprüche

1. Gerät in einem Spritzgießwerkzeug (1) zum Gemischspritzgießen, um beim Öffnen des Werkzeugs eine rotatorische Bewegung auf eine Wendeplatte (3), die rotatorisch in dem Werkzeug (1) durch eine Rotationswelle (6) gestützt und in einem bestimmten Winkel angeordnet ist, zu übertragen, so daß ein Teil (13), das in einer ersten Formkammer (11) spritzgegossen wurde, dadurch zu einer weiteren Kammer von zumindest zwei Formkammern in dem Werkzeug, die für die Aufbringung weiteren Materials ausgebildet ist, transportiert werden kann, **dadurch gekennzeichnet, daß** die Rotationswelle (6) an einem entfernten Ende zumindest einen radial federbelasteten Schieber (8) trägt, der derart ausgebildet ist, daß dieser in mindestens einer Spiralnut (9) läuft, die um eine kreisrunde Welle (10) angeordnet ist, auf die eine lineare, axiale Bewegung in einer ersten Richtung (R1) relativ zu dem Schieber übertragen werden kann, wenn sich das Werkzeug öffnet, so daß die rotatorische Bewegung durch den Schieber (8), der durch die Spiralnut (9) von einem ersten zu einem zweiten Ende der kreisrunden Welle (10) läuft, auf die Wendeplatte (3) übertragen wird, und daß die Spiralnut (9) derart ausgebildet ist, daß die rotatorische Bewegung der Wendeplatte während der ersten Hälfte der rotatorischen Bewegung mit einer konstanten Beschleunigung erfolgt und während der abschließenden Hälfte der rotatorischen Bewegung mit einer konstanten Verzögerung erfolgt.

2. Gerät nach Anspruch 1, **dadurch gekennzeichnet, daß** eine Spiralnut (9) um die kreisrunde Welle (10) für jede Formkammer ausgebildet ist und daß die Spiralnuten (9) derart angeordnet sind, daß die Rotationsbewegung um einen Betrag von 360° geteilt durch die Anzahl der Spiralnuten (9) erfolgt und daß die kreisrunde Welle (10) mit einer Anzahl von axialen, bzgl. der Tiefe ansteigenden Nuten (16) versehen ist, die der Anzahl der Spiralnuten (9) entspricht, wobei die bzgl. der Tiefe ansteigenden Nuten (16) an einem ersten Ende der kreisrunden Welle (10) jeweils mit einer Spiralnut (9) auf der äußeren Oberfläche der kreisrunden Welle verbunden sind und ferner mit einem Tiefenanstieg in Richtung des zweiten Endes der kreisrunden Welle versehen sind, wo sie den Grund von jeder angrenzenden Spiralnut in der Rotationsrichtung berühren, und daß, nachdem die Wendeplatte (3) eine Rotationsbewegung abgeschlossen hat, eine lineare, axiale Bewegung auf die kreisrunde Welle (10) in eine zweite Richtung (R2), die der ersten Richtung (R1) entgegengesetzt ist, übertragbar ist, wobei der Schieber (8) durch eine bzgl. der Tiefe ansteigende Nut (16) von einem zweiten zu einem ersten Ende der kreisrunden Welle (10) läuft und die Wendeplatte (3) dieselbe Winkelposition beibehält.

3. Gerät gemäß einem der vorangehenden Ansprüche, **dadurch gekennzeichnet, daß** durch eine operative Verbindung die lineare, axiale Bewegung relativ zu dem Schieber (8) auf die kreisrunde Welle (10) übertragbar ist, kombiniert mit einer hin- und hergehenden Auswurfbewegung.

## Revendications

1. Dispositif destiné à un outil de moulage par injection (1) pour le moulage par injection combiné, afin, lorsque l'outil s'ouvre, de communiquer un mouvement de rotation à une plaque tournante (3), supportée de façon tournante dans l'outil (1) au moyen d'un arbre rotatif (6), correspondant à un certain angle, de sorte qu'une pièce (13) moulée par injection dans une première chambre de moule (11) peut ainsi être transférée à une autre chambre d'au moins deux chambres de moule dans l'outil, qui est prévue pour l'application d'une autre matière, **caractérisé en ce que** l'arbre rotatif (6) porte, à une extrémité distante, au moins un curseur radialement chargé élastiquement (8), qui est prévu pour se déplacer dans au moins une rainure hélicoïdale (9) ménagée autour d'un arbre circulaire (10) auquel, lorsque l'outil s'ouvre, un mouvement axial linéaire peut être communiqué dans une première direction (R1) par rapport au curseur, de sorte qu'un mouvement de rotation est communiqué à la plaque tournante (3) par le curseur (8) qui se déplace dans la rainure hélicoïdale (9) d'une première extrémité à une deuxième extrémité de l'arbre circulaire (10), et **en ce que** la rainure hélicoïdale (9) est réalisée de sorte que le mouvement de rotation de la plaque tournante est engendré avec une accélération constante pendant la première moitié du mouvement de rotation et avec une décélération constante pendant la dernière moitié du mouvement de rotation.

2. Dispositif selon la revendication 1, **caractérisé en ce qu'**une rainure hélicoïdale (9) est ménagée autour de l'arbre circulaire (10) pour chaque chambre de moule et les rainures hélicoïdales (9) sont disposées de sorte que le mouvement de rotation s'élève à 360 degrés divisés par le nombre de rainures hélicoïdales (9), **en ce que** l'arbre circulaire (10) comporte le même nombre de rainures axiales de profondeur croissante (16) qu'il y a de rainures hélicoïdales (9), les dites rainures de profondeur croissante (16) se raccordant chacune, à une première extrémité de l'arbre circulaire (10), avec une rainure hélicoïdale (9) de la surface extérieure de l'arbre circulaire et étant en outre formées avec une profondeur croissante vers la deuxième extrémité de l'arbre circulaire où elles se raccordent au fond de chaque rainure hélicoïdale adjacente dans la direction de rotation, et **en ce que**, lorsque la plaque tournante (3) a terminé un mouvement de rotation, un mouvement axial linéaire peut être communiqué à l'arbre circulaire (10) dans une deuxième direction (R2) opposée à la première direction (R1), le curseur (8) se déplaçant dans une rainure de profondeur croissante (16) d'une deuxième extrémité à une première extrémité de l'arbre circulaire (10) tandis que la plaque tournante (3) conserve la même position angulaire.

3. Dispositif selon l'une ou l'autre des revendications précédentes, **caractérisé en ce que**, par l'intermédiaire d'une liaison fonctionnelle, le mouvement axial linéaire par rapport au curseur (8) peut être communiqué à l'arbre circulaire (10) en combinaison avec un mouvement alternatif d'éjection.
